# EUROPEAN PATENT APPLICATION

(11) **EP 4 507 377 A1**
(43) Date of publication of application: **12.02.2025**
(21) Application number: 22936210.8
(22) Date of filing: 08.04.2022
(51) Int. Cl.: H04W 36/00

(54) **METHODS FOR CONTROLLING RELEASE OF SOURCE SECONDARY NODE, AND APPARATUS**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2022/085970
(87) International publication number: WO 2023/193273

(57) **Abstract**

Disclosed in the embodiments of the present disclosure are methods for controlling release of a source secondary node, which can be applied to the technical field of communications. A method executed by a source master node comprises: on the basis of an instruction information used for instructing the source master node to initiate a release process of a source secondary node, initiating the release process of the source secondary node. Therefore, the source master node is triggered by the instruction information to initiate the source secondary node to release resources of a terminal device at a correct occasion, the source secondary node is prevented from releasing the resources of the terminal device too early, and the influence on the throughput of the terminal device is reduced.

## Description

### TECHNICAL FIELD

The present disclosure relates to the field of communication technologies, and provides a method and an apparatus for controlling release of a source secondary node.

### BACKGROUND

Dual connectivity (DC) terminal devices can access two cell groups, namely the master cell group (MCG) and the secondary cell group (SCG). The MCG corresponds to a master node (MN) on the network side, and the SCG corresponds to a secondary node (SN) on the network side.

In a dual connectivity scenario of the current system, during the movement of a terminal device, there may be situations of conditional handover (CHO), conditional primary secondary cell (PSCell) change (conditional PSCell change, CPC), conditional PSCell add (CPA). In a case where CPC is executed while executing CHO, or SCG is configured while executing CHO, when a source MN receives a handover request confirmation message from a target MN, the source MN will immediately send a source SN release request message to make a source SN release a resource of a corresponding terminal device. After receiving the SN release request message, the source SN will stop providing user data to the terminal device, which may cause the terminal device to lose an SCG service before executing CHO, thereby affecting the throughput of the terminal device.

### SUMMARY

Embodiments of the present disclosure provide a method and an apparatus for controlling release of a source secondary node.

In a first aspect, an embodiment of the present disclosure provides a method for controlling release of a source secondary node, which is executed by a source master node. The method includes:
initiating a source secondary node release procedure based on indication information, where the indication information is used to instruct the source master node to initiate the source secondary node release procedure.

In the present disclosure, the source master node may initiate the source secondary node release procedure based on the indication information used to instruct the source master node to initiate the source secondary node release procedure. Thus, with the trigger of the indication information, the source master node instructs the source secondary node to release resources of the terminal device at a correct time, thereby preventing the source secondary node from prematurely releasing the resources of the terminal device, and reducing the impact on the throughput of the terminal device.

Optionally, the method further includes:
receiving the indication information sent by a terminal device; or,
receiving the indication information sent by a target master node; or,
receiving the indication information sent by a target secondary node and forwarded by a target master node.

Optionally, the indication information is implicit indication information, or the indication information is explicit indication information.

Optionally, the receiving the indication information sent by the terminal device includes:
determining receipt of the indication information, in response to receiving terminal device assistance information sent by the terminal device.

Optionally, the receiving the indication information sent by the terminal device includes:
determining receipt of the indication information, in response to a value of a preset bit used for indication in the information sent by the terminal device being a preset value, or the information sent by the terminal device including a bit used for indication.

Optionally, the receiving the indication information sent by the target master node includes:
determining receipt of the indication information, in response to receiving a handover success message sent by the target master node.

Optionally, the initiating the source secondary node release procedure includes:
sending a release request message to the source secondary node.

Optionally, the method further includes:
sending a release request message to the source secondary node, in response to receiving a handover success message sent by the target master node.

In a second aspect, an embodiment of the present disclosure provides a method for controlling release of a source secondary node, executed by a terminal device. The method includes:
sending indication information to a source master node, where the indication information is used to instruct the source master node to initiate a source secondary node release procedure.

In the present disclosure, the terminal device may send indication information to the source master node for instructing the source master node to initiate the source secondary node release procedure, and then, the source master node may initiate the source secondary node release procedure. Thus, the indication information triggers the source master node to initiate the procedure of the source secondary node releasing resources of the terminal device at the correct time, thereby preventing the source secondary node from prematurely releasing resources of the terminal device and reducing the impact on the throughput of the terminal device.

Optionally, the method further includes:
sending the indication information to the source master node, in response to the terminal device triggering a conditional reconfiguration.

Optionally, the terminal device triggering the conditional reconfiguration includes:
the terminal device meeting a condition for triggering the conditional reconfiguration of one or more candidate cells; or,
the terminal device starting an execution process of the conditional reconfiguration.

Optionally, the sending the indication information to the source master node includes:
sending the indication information to the source master node before the terminal device and the source master node are disconnected; and/or,
sending the indication information to the source master node before a configuration of a selected candidate cell is applied.

Optionally, the indication information is implicit indication information, or the indication information is explicit indication information.

Optionally, the sending the indication information to the source master node includes:
sending terminal device assistance information to the source master node, where the terminal device assistance information is used to indicate the indication information;

Optionally, the receiving the indication information sent by the terminal device includes:
sending information to the source master node, where a value of a preset bit in the information or a preset bit in the information sent by the terminal device is used to indicate the indication information.

In a third aspect, an embodiment of the present disclosure provides a method for controlling release of a source secondary node, executed by a target master node. The method includes:
sending indication information to a source master node, where the indication information is used to instruct the source master node to initiate a source secondary node release procedure.

In the present disclosure, the target master node may send indication information to the source master node for instructing the source master node to initiate the source secondary node release procedure, and then, the source master node may initiate the source secondary node release procedure. Thus, the indication information triggers the source master node to initiate the procedure of the source secondary node releasing resources of the terminal device at a correct time, thereby preventing the source secondary node from prematurely releasing resources of the terminal device and reducing the impact on the throughput of the terminal device.

Optionally, the sending the indication information to the source master node includes:
sending the indication information to the source master node, in response to receiving a reconfiguration complete message; or,
forwarding the indication information to the source master node, in response to receiving the indication information sent by a target secondary node.

Optionally, the sending the indication information to the source master node includes:
sending a handover success message to the source master node, where the handover success message is used to indicate the indication information.

In a fourth aspect, an embodiment of the present disclosure provides a method for controlling release of a source secondary node, executed by a target secondary node. The method includes:
sending indication information to a target master node, where the indication information is used to instruct a source master node to initiate a source secondary node release procedure.

In the present disclosure, the target secondary node can send indication information to the target master node for instructing the source master node to initiate the source secondary node release procedure, and then the target master node can forward the indication information to the source master node. The source master node can initiate the source secondary node release procedure when receiving the indication information. Thus, the indication information triggers the source master node to initiate the procedure that the source secondary node releases a resource of the terminal device at a correct time, thereby preventing the source secondary node from prematurely releasing the resource of the terminal device and reducing the impact on the throughput of the terminal device.

Optionally, the sending the indication information to the target master node includes:
sending the indication information to the target master node, in response to receiving a reconfiguration complete message.

In a fifth aspect, an embodiment of the present disclosure provides a communication apparatus on the side of a source master node, which includes:
a processing module, configured to initiate a source secondary node release procedure based on indication information, where the indication information is used to instruct a source master node to initiate the source secondary node release procedure.

Optionally, the communication apparatus further includes a transceiver module, configured to:
receive the indication information sent by a terminal device; or,
receive the indication information sent by a target master node; or,
receive the indication information sent by a target secondary node and forwarded by a target master node.

Optionally, the indication information is implicit indication information, or the indication information is explicit indication information.

Optionally, the transceiver module is further configured to:
determine receipt of the indication information, in response to receiving terminal device assistance information sent by the terminal device.

Optionally, the transceiver module is further configured to:
determine receipt of the indication information, in response to that a value of a preset bit used for indication in the information sent by the terminal device is a preset value, or the information sent by the terminal device includes a bit used for indication.

Optionally, the transceiver module is further configured to:
determine receipt of the indication information, in response to receiving a handover success message sent by the target master node.

Optionally, the processing module is further configured to:
send a release request message to the source secondary node.

Optionally, the processing module is further configured to:
send a release request message to the source secondary node, in response to receiving a handover success message sent by the target master node.

In a sixth aspect, an embodiment of the present disclosure provides a communication apparatus on the side of a terminal device, which includes:
a transceiver module, configured to send indication information to a source master node, where the indication information is used to instruct the source master node to initiate a source secondary node release procedure.

Optionally, the communication apparatus further includes:
a processing module, configured to send indication information to the source master node, in response to the terminal device triggering a conditional reconfiguration.

Optionally, the above terminal device triggering the conditional reconfiguration includes:
the terminal device meets a condition for triggering the conditional reconfiguration of one or more candidate cells; or,
the terminal device starts an execution process of the conditional reconfiguration.

Optionally, the transceiver module is configured to:
send the indication information to the source master node before the terminal device and the source master node are disconnected; and/or,
send the indication information to the source master node before a configuration of a selected candidate cell is applied.

Optionally, the indication information is implicit indication information, or the indication information is explicit indication information.

Optionally, the transceiver module is configured to:
send terminal device assistance information to the source master node, where the terminal device assistance information is used to indicate the indication information;

Optionally, the transceiver module is configured to:
send information to the source master node, where a value of a preset bit in the information or a preset bit in the information sent by the terminal device is used to indicate the indication information.

In a seventh aspect, an embodiment of the present disclosure provides a communication apparatus on the side of a target master node, including:
a transceiver module, configured to send indication information to a source master node, where the indication information is used to instruct the source master node to initiate a source secondary node release procedure.

Optionally, the communication apparatus further includes a processing module, configured to:
send the indication information to the source master node, in response to receiving a reconfiguration complete message; or,
forward the indication information to the source master node, in response to receiving the indication information sent by a target secondary node.

Optionally, the transceiver module is configured to:
send a handover success message to the source master node, where the handover success message is used to indicate the indication information.

In an eighth aspect, an embodiment of the present disclosure provides a communication apparatus on the side of a target secondary node, including:
a transceiver module, configured to send indication information to a target master node, where the indication information is used to instruct a source master node to initiate a source secondary node release procedure.

Optionally, the communication apparatus further includes a processing module, configured to:
send the indication information to the target master node, in response to receiving a reconfiguration complete message.

In a ninth aspect, an embodiment of the present disclosure provides a communication apparatus, including a processor. The processor is configured to invoke a computer program stored in a memory to execute the method described in the above first aspect.

In a tenth aspect, an embodiment of the present disclosure provides a communication apparatus, which includes a processor. When the processor is configured to invoke a computer program in a memory, the processor executes the method described in the above second aspect.

In an eleventh aspect, an embodiment of the present disclosure provides a communication apparatus. The communication apparatus includes a processor. When the processor is configured to invoke a computer program in a memory, the processor executes the method described in the above third aspect.

In a twelfth aspect, an embodiment of the present disclosure provides a communication apparatus. The communication apparatus includes a processor. When the processor is configured to invoke a computer program in a memory, the processor executes the method described in the above fourth aspect.

In a thirteenth aspect, an embodiment of the present disclosure provides a communication apparatus. The communication apparatus includes a processor and a memory, and a computer program is stored in the memory. The processor executes the computer program stored in the memory, to cause the communication apparatus to execute the method described in the first aspect above.

In a fourteenth aspect, an embodiment of the present disclosure provides a communication apparatus. The communication apparatus includes a processor and a memory, and a computer program is stored in the memory. The processor executes the computer program stored in the memory, to cause the communication apparatus to execute the method described in the second aspect above.

In a fifteenth aspect, an embodiment of the present disclosure provides a communication apparatus. The communication apparatus includes a processor and a memory, and a computer program is stored in the memory. The processor executes the computer program stored in the memory, to cause the communication apparatus to execute the method described in the third aspect above.

In a sixteenth aspect, an embodiment of the present disclosure provides a communication apparatus. The communication apparatus includes a processor and a memory, and a computer program is stored in the memory. The processor executes the computer program stored in the memory, to cause the communication apparatus to execute the method described in the fourth aspect above.

In a seventeenth aspect, an embodiment of the present disclosure provides a communication apparatus, which includes a processor and an interface circuit. The interface circuit is configured to receive code instructions and transmit the same to the processor. The processor is configured to run the code instructions to cause the device to perform the method described in the first aspect above.

In an eighteenth aspect, an embodiment of the present disclosure provides a communication apparatus. The device includes a processor and an interface circuit. The interface circuit is configured to receive code instructions and transmit them to the processor. The processor is configured to run the code instructions to cause the device to perform the method described in the second aspect above.

In a nineteenth aspect, an embodiment of the present disclosure provides a communication apparatus. The device includes a processor and an interface circuit. The interface circuit is configured to receive code instructions and transmit them to the processor. The processor is configured to run the code instructions to cause the device to perform the method described in the third aspect above.

In a twentieth aspect, an embodiment of the present disclosure provides a communication apparatus, which includes a processor and an interface circuit. The interface circuit is configured to receive code instructions and transmit them to the processor. The processor is configured to run the code instructions to cause the device to perform the method described in the fourth aspect above.

In a twenty-first aspect, an embodiment of the present disclosure provides a system for controlling release of a source secondary node. The system includes the communication apparatus described in the fifth aspect, the communication apparatus described in the sixth aspect, the communication apparatus described in the seventh aspect, and the communication apparatus according to the eighth aspect. Alternatively, the system includes the communication apparatus according to the ninth aspect, the communication apparatus according to the tenth aspect, the communication apparatus according to the eleventh aspect, and the communication apparatus according to the twelfth aspect. Alternatively, the system includes the communication apparatus according to the thirteenth aspect, the communication apparatus according to the fourteenth aspect, the communication apparatus according to the fifteenth aspect, and the communication apparatus according to the sixteenth aspect. Alternatively, the system includes the communication apparatus described in the seventeenth aspect, the communication apparatus described in the eighteenth aspect, the communication apparatus described in the nineteenth aspect, and the communication apparatus described in the twentieth aspect.

In a twenty-second aspect, an embodiment of the present invention provides a computer-readable storage medium, configured to store instructions used by the above-mentioned terminal device. The instructions, when executed, cause the terminal device to perform the method according to the above first aspect.

In a twenty-third aspect, an embodiment of the present invention provides a computer-readable storage medium, configured to store instructions used by the above-mentioned network device. The instructions, when executed, cause the network device to perform the method according to the above second aspect.

In a twenty-fourth aspect, an embodiment of the present invention provides a computer-readable storage medium, configured to store instructions used by the above-mentioned network device. The instructions, when executed, cause the network device to perform the method according to the above third aspect.

In a twenty-fifth aspect, an embodiment of the present invention provides a computer-readable storage medium, configured to store instructions used by the above-mentioned network device. The instructions, when executed, cause the network device to perform the method according to the above fourth aspect.

In a twenty-sixth aspect, the present disclosure further provides a computer program product including a computer program. The computer program, when running on a computer, causes the computer to execute the method described in the first aspect.

In a twenty-seventh aspect, the present disclosure further provides a computer program product including a computer program. The computer program, when running on a computer, causes the computer to execute the method described in the second aspect.

In a twenty-eighth aspect, the present disclosure further provides a computer program product including a computer program. The computer program, when running on a computer, causes the computer to execute the method described in the third aspect.

In a twenty-ninth aspect, the present disclosure further provides a computer program product including a computer program, which, when running on a computer, causes the computer to execute the method described in the fourth aspect.

In a thirtieth aspect, the present disclosure provides a chip system. The chip system includes at least one processor and an interface for supporting the terminal device to implement the functions involved in the first aspect, for example, determining or processing at least one of data or information involved in the above method. In a possible design, the chip system further includes a memory, and the memory is configured to store necessary computer programs and data for the terminal device. The chip system may include a chip, or may include the chip and other discrete devices.

In a thirty-first aspect, the present disclosure provides a chip system. The chip system includes at least one processor and an interface for supporting a network device to implement the functions involved in the second aspect, for example, determining or processing at least one of data or information involved in the above method. In a possible design, the chip system further includes a memory, and the memory is configured to store necessary computer programs and data for the network device. The chip system may include a chip, or may include the chip and other discrete devices.

In a thirty-second aspect, the present disclosure provides a chip system. The chip system includes at least one processor and an interface for supporting a network device to implement the functions involved in the third aspect, for example, determining or processing at least one of data or information involved in the above method. In a possible design, the chip system further includes a memory, and the memory is configured to store necessary computer programs and data for the network device. The chip system may include a chip, or may include the chip and other discrete devices.

In a thirty-third aspect, the present disclosure provides a chip system. The chip system includes at least one processor and an interface for supporting a network device to implement the functions involved in the fourth aspect, for example, determining or processing at least one of data or information involved in the above method. In a possible design, the chip system further includes a memory, and the memory is configured to store necessary computer programs and data for the network device. The chip system may include a chip, or may include the chip and other discrete devices.

In a thirty-fourth aspect, the present disclosure provides a computer program that, when running on a computer, causes the computer to execute the method described in the first aspect.

In a thirty-fifth aspect, the present disclosure provides a computer program that, when running on a computer, causes the computer to perform the method described in the second aspect.

In a thirty-sixth aspect, the present disclosure provides a computer program that, when running on a computer, causes the computer to execute the method described in the third aspect.

In a thirty-seventh aspect, the present disclosure provides a computer program that, when running on a computer, causes the computer to execute the method described in the fourth aspect.

### BRIEF DESCRIPTION OF THE DRAWINGS

In order to more clearly illustrate technical solutions in the embodiments of the present disclosure or in the background technology, the drawings required to be used in the embodiments or in the background technology of the present disclosure will be described below.
FIG. 1 is a schematic architectural diagram of a communication system provided by an embodiment of the present disclosure.
FIG. 2 is a schematic flowchart of a method for controlling release of a source secondary node provided by an embodiment of the present disclosure.
FIG. 3 is a schematic flowchart of a method for controlling release of a source secondary node provided by an embodiment of the present disclosure.
FIG. 4 is a schematic flowchart of a method for controlling release of a source secondary node provided by an embodiment of the present disclosure.
FIG. 5 is a schematic flowchart of a method for controlling release of a source secondary node provided by an embodiment of the present disclosure.
FIG. 6 is a schematic flowchart of a method for controlling release of a source secondary node provided by an embodiment of the present disclosure.
FIG. 7 is a schematic flowchart of a method for controlling release of a source secondary node provided by an embodiment of the present disclosure.
FIG. 8 is a schematic flowchart of a method for controlling release of a source secondary node provided by an embodiment of the present disclosure.
FIG. 9 is a schematic flowchart of a method for controlling release of a source secondary node provided by an embodiment of the present disclosure.
FIG. 10 is a schematic flowchart of a method for controlling release of a source secondary node provided by an embodiment of the present disclosure.
FIG. 11 is a schematic flowchart of a method for controlling release of a source secondary node provided by an embodiment of the present disclosure.
FIG. 12 is a schematic flowchart of a method for controlling release of a source secondary node provided by an embodiment of the present disclosure.
FIG. 13 is a schematic flowchart of a method for controlling release of a source secondary node provided by an embodiment of the present disclosure.
FIG. 14 is a schematic flowchart of a method for controlling release of a source secondary node provided by an embodiment of the present disclosure.
FIG. 15 is a schematic flowchart of a method for controlling release of a source secondary node provided by an embodiment of the present disclosure.
FIG. 16 is a schematic structural diagram of a communication apparatus provided by an embodiment of the present disclosure.
FIG. 17 is a schematic structural diagram of another communication apparatus provided by an embodiment of the present disclosure.
FIG. 18 is a schematic structural diagram of a chip provided by an embodiment of the present disclosure.

### DETAILED DESCRIPTION

For ease of understanding, terminologies involved in the present disclosure are first introduced.

### 1. Primary Cell (PCell)

There may be a plurality of Cells under MCG, including a cell used to initiate initial access. This cell is referred to as PCell. As the name suggests, PCell is the most "primary" cell in MCG.

### 2. Secondary Cell (SCell)

The secondary cell in the MCG is SCell. The PCell under the MCG and the SCell under the MCG are aggregated together via carrier aggregation (CA). The MCG includes one or more SCells.

### 3. Primary Secondary Cell (PSCell)

The primary secondary cell in the SCG is PSCell, and the SCG includes one or more SCells.

### 4. Source MN

The MN currently serves a terminal device.

### 5. Source SN

The SN currently serves the terminal device.

### 6. Target MN

The MN is used to prepare one or more of a target PCell, a target MCG, a candidate target PCell, or a candidate target MCG for the terminal device. A target MN for preparing the candidate target PCell and/or the candidate target MCG may also be referred to as a candidate target MN.

### 7. Target SN

The SN is used to prepare one or more of the target PSCell, the target SCG, the candidate target PSCell, or the candidate target SCG for the terminal device. A target SN for preparing the candidate target PSCell and/or the candidate target SCG may also be referred to as a candidate target SN.

### 8. Target MCG

The target MCG is a target MCG or a candidate target MCG that can provide network services for the terminal device after MCG change is initiated, and corresponds to the target MN.

### 9. Target SCG

The target SCG is a target SCG or a candidate target SCG that can provide network services for the terminal device after SCG change or addition is initiated, and corresponds to the target SN.

### 10. Mobility process triggered based on a condition

In the 5th Generation Mobile Communication Technology (5G) system, the terminal device can perform cell movement based on a "preconfigured condition" of the network device and a "preconfigured cell" corresponding to the condition. When the terminal device meets the "preconfigured condition", such as a specific measurement event, the terminal device changes a serving cell to the "preconfigured cell". The "mobility process based on condition triggering" includes: Conditional Handover (CHO), Conditional PSCell Addition (CPA) and Conditional PSCell Change (CPC).

In order to better understand the method for controlling release of a source secondary node disclosed in the embodiments of the present disclosure, the communication system to which the embodiments of the present disclosure are applicable will be described below.

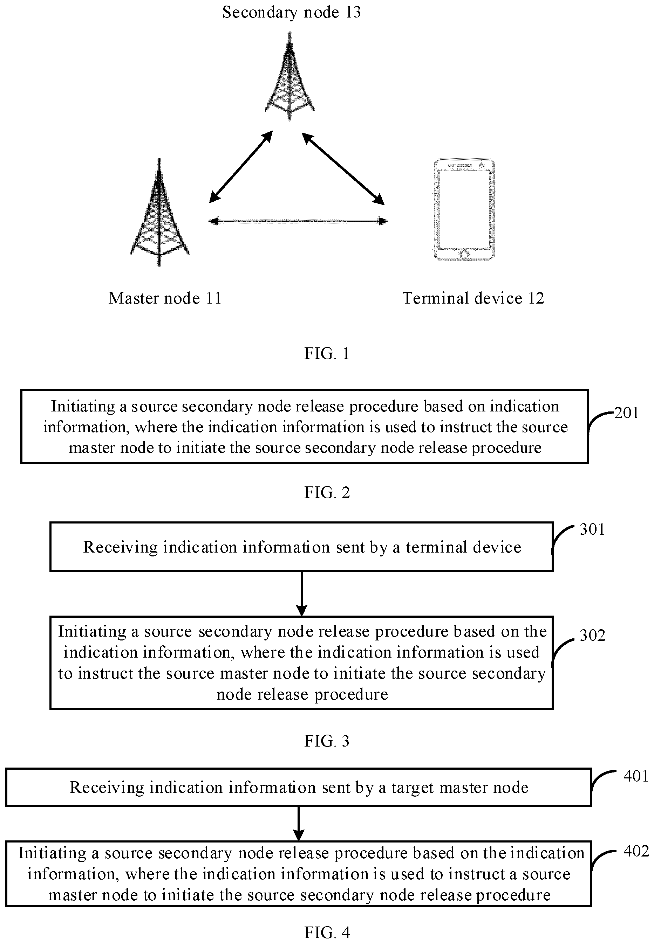

Referring to FIG. 1, FIG. 1 is a schematic architectural diagram of a communication system provided by an embodiment of the present disclosure. The communication system may include but is not limited to one network device and one terminal device. The number and form of devices shown in FIG. 1 are only for examples and do not constitute a limitation on the embodiments of the present disclosure. In actual applications, the communication system may include two or more network devices, two or more assistance communication apparatuses, and two or more terminal devices. The communication system shown in FIG. 1 includes a master node 11, a terminal device 12 and a secondary node 13, which are taken as an example.

It should be noted that the technical solution of the embodiments of the present disclosure can be applied to various communication systems. For example: long term evolution (LTE) system, 5th generation (5G) mobile communication system, 5G new radio (NR) system, or other future new mobile communication systems.

The master node 11 and the secondary node 13 in the embodiments of the present disclosure are entities on the network side that are used to transmit or receive signals, and they may be a master node and a secondary node corresponding to the terminal device 12, respectively. For example, each of the master node 11 and the secondary node 13 may be an evolved NodeB (eNB), a transmission reception point (TRP), a next generation NodeB (gNB) in the NR system, a base station in other future mobile communication systems, or an access node in wireless fidelity (WiFi) systems, etc. The specific technologies and the specific device form used by the network device are not limited in the embodiments of the present disclosure. The network device provided by the embodiments of the present disclosure may include a centralized unit (CU) and a distributed unit (DU). The CU may also be called a control unit. Protocol layers of the network device, for example, a base station, may be separated by using the structure of CU-DU, where functions of some protocol layers are arranged on the CU for centralized control, and some or all of functions of the remaining protocol layers are distributed in the DU, and the CU centrally controls the DU.

The terminal device 12 in the embodiments of the present disclosure is an entity on the user side for receiving or transmitting signals, such as a mobile phone. The terminal device may also be referred to as terminal, user equipment (UE), mobile station (MS), mobile terminal (MT), etc. The terminal device may be a car with communication functions, a smart car, a mobile phone, a wearable device, a tablet computer (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, etc. The specific technologies and the specific device form used by the terminal device are not limited in the embodiments of the present disclosure.

It will be understood that the communication system described in the embodiments of the present disclosure is to more clearly illustrate the technical solutions of the embodiments of the present disclosure, and does not constitute a limitation on the technical solutions provided by the embodiments of the present disclosure. As those of ordinary skill in the art will know, with the evolution of the system architecture and the emergence of new service scenarios, the technical solutions provided by the embodiments of the present disclosure are also applicable to similar technical problems.

Generally, during the movement of a terminal device in a dual connectivity scenario, there may be situations of conditional handover (CHO), conditional PSCell change (CPC), conditional PSCell add (CPA). In a case where CPC is executed while executing CHO, or SCG is configured while executing CHO, when a source MN receives a handover request confirmation message from a target MN, the source MN will immediately send a source SN release request message to make a source SN release a resource of a corresponding terminal device. After receiving the source SN release request message, the source SN will stop providing user data to the terminal device, which may cause the terminal device to lose an SCG service before executing CHO, thereby affecting the throughput of the terminal device. In the present disclosure, in order to reduce the impact of executing CHO on the throughput of the terminal device, a source master node may be instructed to initiate a source secondary node release procedure after trigger of CHO is determined. This can avoid the case that the terminal device loses the SCG service before triggering CHO, and reduces the impact on the throughput of the terminal device.

A method and an apparatus for controlling release of a source secondary node provided by the present disclosure will be introduced in detail below with reference to the accompanying drawings.

It should be noted that in the present disclosure, the method for controlling release of a source secondary node provided in any embodiment can be executed separately, or executed in combination with a possible implementation in other embodiments, or executed in combination with any method in related technologies.

Referring to FIG. 2, FIG. 2 is a schematic flowchart of a method for controlling release of a source secondary node provided by an embodiment of the present disclosure. The method is executed by a source master node. As shown in FIG. 2, the method may include but is not limited to the following steps.

Step 201: initiating a source secondary node release procedure based on indication information, where the indication information is used to instruct the source master node to initiate the source secondary node release procedure.

The source secondary node release procedure may include processes such as releasing a resource corresponding to the terminal device, which are not limited in the present disclosure.

Usually, in a case that the terminal device performs CPC while performing CHO, or configures a target SCG while performing CHO, when the source MN receives a handover request confirmation message from a target MN, the terminal device often has not accessed the target MN, and the source MN and the source SN still provide network services to the terminal device currently. In this case, the source MN sends an SN release request message to the source SN, and the source SN may immediately release resources of the corresponding terminal device and may stop providing user data to the terminal device. As a result, only the source MN is providing network services to the terminal device, which result in a reduced throughput of terminal.

In the present disclosure, in order to avoid the problem of reduced throughput of the terminal device due to the incorrect timing of the source MN instructing the source SN to release resources, the terminal device or the target MN may send indication information to the source MN to indicate that the source MN can initiate the source secondary node release procedure, which ensures that the source SN can still provide communication services for the terminal device during the CHO handover procedure, thereby avoiding the impact on the throughput of the terminal device due to inappropriate release timing of the source SN.

Optionally, the source master node may directly send an instruction message for instructing the source secondary node to perform the release procedure, and the source secondary node directly executes the release procedure after receiving the instruction message. Alternatively, the source master node may send a release request message to the source secondary node, and the source secondary node determines whether to perform the release procedure.

Optionally, the source master node may also receive a release request confirmation message sent by the source secondary node, where the release request confirmation message is used to instruct the source secondary node to start executing the release procedure.

In the present disclosure, the source master node may initiate the source secondary node release procedure based on the indication information used to instruct the source master node to initiate the source secondary node release procedure. Thus, with the trigger of the indication information, the source master node instructs the source secondary node to release resources of the terminal device at the correct time, thereby preventing the source secondary node from prematurely releasing the resources of the terminal device, and reducing the impact on the throughput of the terminal device.

Referring to FIG. 3, FIG. 3 is a schematic flowchart of a method for controlling release of a source secondary node provided by an embodiment of the present disclosure. The method is executed by a source master node. As shown in FIG. 3, the method may include but is not limited to the following steps.

Step 301: receiving indication information sent by a terminal device.

In the present disclosure, in a case that the terminal device performs CPC and performs CHO simultaneously, or the terminal device configures a target SCG and performs CHO simultaneously, the terminal device can evaluate a candidate target cell corresponding to a candidate target node, for example, performing measurements, to determine whether the terminal device meets a conditional reconfiguration triggering condition of a candidate target cell corresponding to any candidate target node. When a conditional reconfiguration triggering condition of a candidate target cell corresponding to a certain candidate target node is met, the candidate target cell corresponding to the certain candidate target node may be determined as a triggering cell, and then an execution process of the conditional reconfiguration may be started. In addition, since the cell that satisfies the conditional reconfiguration triggering condition may be one or multiple, the triggering cell may be one or multiple.

The execution process of the conditional reconfiguration includes: determining the number of triggering cells; if there is one triggering cell, using the triggering cell as a target cell; if there are multiple triggering cells, selecting one of the cells as the target cell. Subsequently, the terminal device may apply a configuration corresponding to the target cell, may initiate random access to the target cell, may successfully access the target node, and may be disconnected from the source node.

In the present disclosure, the terminal device may send the indication information to the source MN when the terminal device determines that a conditional reconfiguration triggering condition of a candidate target cell corresponding to any candidate target node is met, so as to instruct the source MN to initiate the source secondary node release procedure, thereby preventing the source SN from prematurely releasing resources of the terminal device, and reducing the impact on the throughput of the terminal device.

Optionally, after determining the triggering cell, the terminal device sends the indication information to the source MN.

Optionally, the terminal device may send the indication information to the source MN when starting an execution process of the conditional reconfiguration.

Optionally, the terminal device may also send the indication information to the source MN before applying the configuration corresponding to the target cell and connecting to the target node.

Optionally, the terminal device may also send the indication information to the source MN before disconnecting from the source node.

Optionally, the indication information may be implicit indication information, or the indication information may also be explicit indication information, which is not limited by the present disclosure.

The implicit indication information may be other information that can implicitly indicate that the terminal device has completed accessing the target node. For example, after the terminal device is connected to the target node, the terminal device sends the source MN any information for indicating that a target node or a target cell has been selected. Optionally, the selected target cell is a target cell selected by a terminal according to CHO configuration; the selected target node is a target node corresponding to the target cell selected by the terminal according to the CHO configuration.

The explicit indication information may be information including the specific content of the indication information, or may be other information using partial bit(s) to identify the indication information, or other information used to specially identify the indication information, which is not limited by the present disclosure.

Optionally, the terminal device may configure the indication information into assistance information of the terminal device and send it to the source master node. Therefore, after receiving the assistance information, the source MN can determine whether to initiate the source SN release procedure.

Optionally, the terminal device may identify the indication information via any information sent to the source MN. For example, a value of a preset bit or the preset bit in any information sent by the terminal device may be used to identify the indication information. In a case that the value of the preset bit is " 1", it means that the source MN may initiate the source SN release procedure; in a case that the value of the preset bit is "0", it means that the source MN does not need to initiate the source SN release procedure. Alternatively, in a case that the preset bit is not empty, it means that the source MN may initiate the source SN release procedure, in a case that the preset bit is empty, it means that the source MN does not need to initiate the source SN release procedure. Alternatively, in a case that the preset bit is not configured, it means that the source MN does not need to initiate the source SN release procedure, in a case that the preset bit is configured, it means that the source MN may initiate the source SN release procedure. Therefore, after receiving the information sent by the terminal device, the source MN may determine that the indication information is received, when the value of the preset bit used for indication in the information is the preset value, or the information sent by the terminal includes the bit used for indication.

Optionally, the source MN determines that the indication information is received, when a value of a preset bit used for indication in information sent by another terminal is a preset value, or information sent by another terminal includes the bit used for indication information.

Optionally, the terminal device may also send 1-bit indication information.

Optionally, in a case that a matched target master node is the source MN, the source MN determines to obtain the indication information. In this case, it is only necessary to modify the relevant configuration without sending the indication information to the source MN.

Step 302: initiating a source secondary node release procedure based on the indication information, where the indication information is used to instruct the source master node to initiate the source secondary node release procedure.

In the present disclosure, for a specific implementation process of step 302, reference may be made to the detailed description of any embodiment of the present disclosure, which will not be described again here.

In the present disclosure, the source master node may receive the indication information sent by the terminal device, and may initiate the source secondary node release procedure based on the indication information used to instruct the source master node to initiate the source secondary node release procedure. Thus, with the trigger of the indication information, the source master node instructs the source secondary node to release resources of the terminal device at the correct time, thereby preventing the source secondary node from prematurely releasing the resources of the terminal device, and reducing the impact on the throughput of the terminal device.

Please refer to FIG. 4. FIG. 4 is a schematic flowchart of a method for controlling release of a source secondary node provided by an embodiment of the present disclosure. The method is executed by a source master node. As shown in FIG. 4, the method may include but is not limited to the following steps.

Step 401: receiving indication information sent by a target master node.

Usually, in a case that the source MN triggers CHO and performs CPC at the same time, or performs CHO and configures a target SCG at the same time, a terminal device can evaluate a candidate target cell corresponding to a candidate target node when performing CHO, for example, performing measurements, to determine whether the terminal device satisfies a conditional reconfiguration triggering condition of the candidate target cell corresponding to any candidate target node. In a case that a conditional reconfiguration triggering condition of a candidate target cell corresponding to a certain candidate target node is met, the certain candidate target node can be determined as the target MN, and a cell corresponding to the certain candidate target node is the target cell. The terminal device may apply the configuration corresponding to the target cell, may initiate random access to the target cell, may successfully access the target MN, and may disconnect from the source MN. Afterwards, the target MN may send a handover success message to the source MN to inform the terminal device that the target MN has been successfully accessed. Transmission of a sequence number status will also be initiated between the target MN and the source MN to obtain a sequence number status associated with the terminal device, to ensure that the target MN can correctly receive the data forwarded by the source MN. Data forwarding may also be performed between the target MN and the source MN to obtain terminal device-related data cached by the source MN.

In the present disclosure, when the target MN sends a handover success message, it indicates that the terminal device has successfully connected with the target MN. When the source MN receives the handover success message sent by the target MN, the source MN may consider that the indication information has been received, and may initiate a release procedure of the source SN.

Alternatively, the target MN may use any bit in the handover success message to instruct the source MN to initiate the source SN release procedure. For example, the value of the bit may be set to "1" to instruct the source MN to initiate the source SN release procedure, and the value of the bit can be set to "0" to indicate that the source MN does not need to initiate the source SN release procedure. Therefore, the source MN may determine the receipt of the indication information, and may initiate the SN release procedure, when determining that a value of a preset bit in the received handover success message sent by the target MN is a preset value.

Optionally, when the source MN transmits the sequence number status, it indicates that the terminal device has successfully connected with the target MN. That is, the source MN may consider that the indication information has been received, and the source SN release procedure may be initiated.

Alternatively, the source MN may initiate the source SN release procedure when sending a sequence number status transmission message.

Optionally, when the source MN forwards data, it indicates that the terminal device has successfully connected with the target MN, that is, the source MN may consider that the indication information has been received, and the source SN release procedure may be initiated.

Optionally, the target MN may also send, to the source MN, separate indication information specifically for instructing the source MN to initiate the source SN release procedure.

Step 402: initiating a source secondary node release procedure based on the indication information, where the indication information is used to instruct the source master node to initiate the source secondary node release procedure.

In the present disclosure, for the specific implementation of step 402, reference may be made to the detailed description of any embodiment of the present disclosure, which will not be described again here.

In the present disclosure, after receiving the indication information sent by the target master node, the source master node may initiate the source secondary node release procedure based on the indication information used to instruct the source master node to initiate the source secondary node release procedure. Thus, the indication information triggers the source master node to initiate the procedure of the source secondary node releasing resources of the terminal device at the correct time, thereby preventing the source secondary node from prematurely releasing resources of the terminal device and reducing the impact on the throughput of the terminal device.

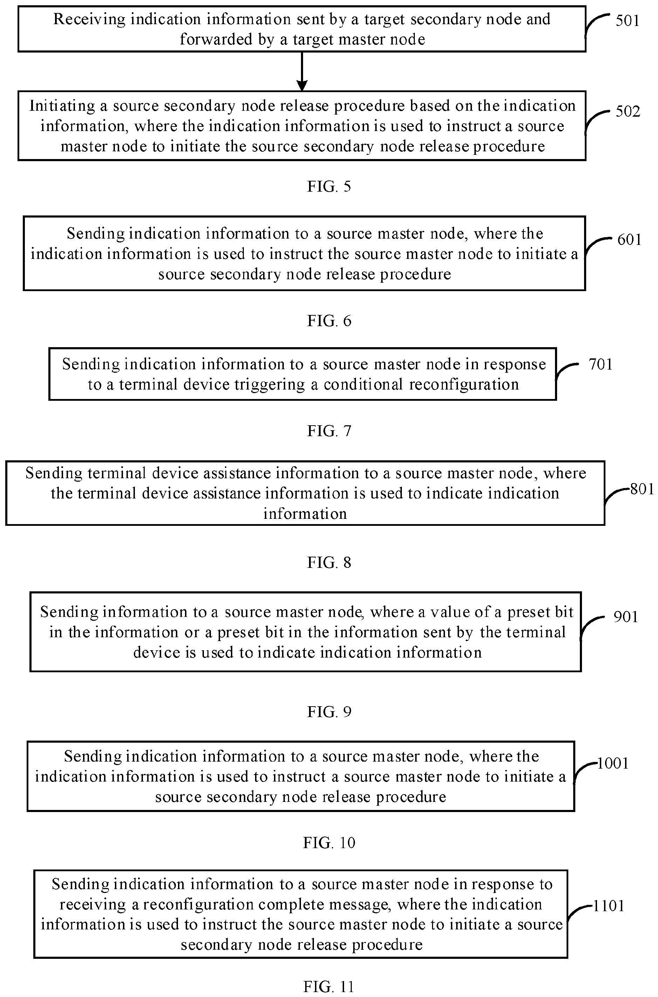

Please refer to FIG. 5. FIG. 5 is a schematic flowchart of a method for controlling release of a source secondary node provided by an embodiment of the present disclosure. The method is executed by the source master node. As shown in FIG. 5, the method may include but is not limited to the following steps:

Step 501: receiving indication information sent by a target secondary node and forwarded by a target master node.

In the present disclosure, in a case that the source MN triggers performing CPC and CHO simultaneously, or configures a target SCG and performs CHO simultaneously, the target MN may perform a CPC configuration when receiving the indication information sent by the source MN for indicating performing CPC and CHO simultaneously, the terminal device may perform a CPC process according to the CPC configuration. After the CPC is completed, the target SN may send indication information to the source MN to indicate that the source MN can initiate the source SN release procedure. However, when the target SN communicates with the source MN, data needs to be forwarded by the target MN. Therefore, the target SN may send the indication information to the target MN, and the target MN forwards the indication information to the source MN to instruct the source MN to initiate the source SN release procedure. This can prevent the source SN from prematurely releasing resources of the terminal device and reduce the impact on the throughput of the terminal device.

Step 502: initiating a source secondary node release procedure based on the indication information, where the indication information is used to instruct the source master node to initiate the source secondary node release procedure.

In the present disclosure, for the specific implementation of step 502, reference may be made to the detailed description of any embodiment of the present disclosure, which will not be described repeatedly here.

In the present disclosure, after receiving the indication information sent by the target secondary node and forwarded by the target master node, the source master node may initiate the source secondary node release procedure based on the indication information used to instruct the source master node to initiate the source secondary node release procedure. Thus, the indication information triggers the source master node to initiate a procedure of the source secondary node releasing resources of the terminal device at the correct time, thereby preventing the source secondary node from prematurely releasing resources of the terminal device and reducing the impact on the throughput of the terminal device.

Please refer to FIG. 6. FIG. 6 is a schematic flowchart of a method for controlling release of a source secondary node provided by an embodiment of the present disclosure. The method is executed by a terminal device. As shown in FIG. 6, the method may include, but not limited to, the following steps.

Step 601: sending indication information to a source master node, where the indication information is used to instruct the source master node to initiate a source secondary node release procedure.

The source MN release procedure may include processes such as releasing resources corresponding to the terminal device, which is not limited by the present disclosure.

Usually, in a case that the terminal device performs CHO and performs CPC simultaneously, or configures a target SCG and performs CHO simultaneously, when the source MN receives a handover request confirmation message from the target MN, the terminal device often has not accessed the target MN, and the source MN and source SN still provide network services to the terminal device currently. In this case, the source MN sends an SN release request message to the source SN, and the source SN may immediately release the resources of the corresponding terminal device and may stop providing user data to the terminal device. As a result, only the source MN is providing network services to the terminal device, which causes the throughput of terminal to be reduced.

In the present disclosure, in order to avoid the problem of reduced throughput of the terminal device due to the incorrect timing of the source MN instructing the source SN to release resources, the terminal device may send indication information to the source MN to indicate that the source MN can initiate the source secondary node release procedure, which ensures that the source SN can still provide communication services for the terminal device during the CHO handover procedure, thereby avoiding the impact on the throughput of the terminal device due to inappropriate release timing of the source SN.

In the present disclosure, the terminal device may send indication information to the source master node for instructing the source master node to initiate the source secondary node release procedure. After that, the source master node may initiate the source secondary node release procedure. Thus, the indication information triggers the source master node to initiate a procedure of the source secondary node releasing resources of the terminal device at the correct time, thereby preventing the source secondary node from prematurely releasing resources of the terminal device and reducing the impact on the throughput of the terminal device.

Please refer to FIG. 7. FIG. 7 is a schematic flowchart of a method for controlling release of a source secondary node provided by an embodiment of the present disclosure. The method is executed by a terminal device. As shown in FIG. 7, the method may include, but not limited to, the following steps.

Step 701: sending indication information to a source master node, in response to the terminal device triggering a conditional reconfiguration.

The terminal device triggering the conditional reconfiguration may include: the terminal device meets a condition for triggering the conditional reconfiguration of one or more candidate cells; or, the terminal device starts an execution process of the conditional reconfiguration.

In the present disclosure, in the case that the terminal device performs CPC and performs CHO simultaneously, or configures a target SCG and performs CHO simultaneously, the terminal device may evaluate a candidate target cell corresponding to a candidate target node, for example, performing measurements, to determine whether the terminal device meets the conditional reconfiguration triggering condition of a candidate target cell corresponding to any candidate target node. When a conditional reconfiguration triggering condition of a candidate target cell corresponding to a certain candidate target node is met, the candidate target cell corresponding to the certain candidate target node may be determined as a triggering cell, and then an execution process of the conditional reconfiguration can be started. In addition, since the cell that satisfies the conditional reconfiguration triggering condition may be one or multiple, the triggering cell may be one or multiple.

The execution process of the conditional reconfiguration includes: determining the number of triggering cells; if there is one triggering cell, using the triggering cell as a target cell; if there are multiple triggering cells, selecting one of the cells as the target cell. Subsequently, the terminal device may apply a configuration corresponding to the target cell, may initiate random access to the target cell, may successfully access the target node, and may be disconnected from the source node.

In the present disclosure, the terminal device may send the indication information to the source MN when the terminal device determines that a conditional reconfiguration triggering condition of a candidate target cell corresponding to any candidate target node is met, so as to instruct the source MN to initiate the source secondary node release procedure, thereby preventing the source SN from prematurely releasing resources of the terminal device, and reducing the impact on the throughput of the terminal device.

Optionally, after determining the triggering cell, the terminal device sends the indication information to the source MN.

Optionally, the terminal device may send the indication information to the source MN when starting the execution process of the conditional reconfiguration.

Optionally, the terminal device may also send the indication information to the source MN before applying the configuration corresponding to the target cell and connecting to the target node.

Optionally, the terminal device may also send the indication information to the source MN before disconnecting from the source node.

Optionally, the indication information may be implicit indication information, or the indication information may also be explicit indication information. The present disclosure does not limit this.

The implicit indication information may be other information that can implicitly indicate that the terminal device has completed accessing the target node. For example, after the terminal device is connected to the target node, the terminal device sends the source MN any information for indicating that a target node or a target cell has been selected. Optionally, the selected target cell is a target cell selected by a terminal according to CHO configuration; the selected target node is a target node corresponding to the target cell selected by the terminal according to the CHO configuration.

The explicit indication information may be information including the specific content of the indication information, or may be other information using part of bits to identify the indication information, or other information used to specially identify the indication information, which is not limited by the present disclosure.

Optionally, in response to that the source master node is not a node of a candidate target cell that meets the conditional reconfiguration triggered by the terminal device, the indication information is sent to the source master node.

Optionally, in a case that the source MN is a node of a candidate target cell for the terminal device to trigger the conditional reconfiguration, the source MN can know when to initiate source SN release without instructions from the terminal device. Therefore, the terminal device may sends the indication information to the source MN, in a case that the source MN is not the node of the candidate target cell for the terminal device to trigger the conditional reconfiguration.

In the present disclosure, the terminal device can send indication information to the source master node when triggering the conditional reconfiguration, that is, when a triggering event of the conditional reconfiguration is met. Subsequently, the source master node may initiate the source secondary node release procedure. Thus, the indication information triggers the source master node to initiate the procedure of the source secondary node releasing resources of the terminal device at a correct time, thereby preventing the source secondary node from prematurely releasing resources of the terminal device and reducing the impact on the throughput of the terminal device.

Please refer to FIG. 8. FIG. 8 is a schematic flowchart of a method for controlling release of a source secondary node provided by an embodiment of the present disclosure. The method is executed by a terminal device. As shown in FIG. 8, the method may include, but not limited to the following steps.

Step 801: sending terminal device assistance information to a source master node, where the terminal device assistance information is used to indicate indication information.

In the present disclosure, the terminal device may configure the indication information in the terminal device assistance information and may send it to the source MN. Therefore, after receiving the assistance information, the source MN can determine whether to initiate the source SN release procedure through analysis.

In the present disclosure, the terminal device sends terminal device assistance information for indicating indication information to the source master node. Afterwards, the source master node can determine whether to initiate the source secondary node release procedure by parsing the assistance information. In this way, the indication information triggers the source master node to initiate the procedure of the source secondary node releasing resources of the terminal device at a correct time, thereby preventing the source secondary node from prematurely releasing resources of the terminal device and reducing the impact on the throughput of the terminal device.

Please refer to FIG. 9. FIG. 9 is a schematic flowchart of a method for controlling release of a source secondary node provided by an embodiment of the present disclosure. The method is executed by a terminal device. As shown in FIG. 9, the method may include but not limited to the following steps.

Step 901: sending information to a source master node, where a value of a preset bit in the information or a preset bit in the information sent by the terminal device is used to indicate the indication information.

Optionally, the terminal device may identify the indication information via any information sent to the source MN. For example, a value of a preset bit or the preset bit in any information sent by the terminal device may be used to identify the indication information. In a case that the value of the preset bit is "1 ", it means that the source MN may initiate the source SN release procedure; in a case that the value of the preset bit is "0", it means that the source MN does not need to initiate the source SN release procedure. Alternatively, in a case that the preset bit is not empty, it means that the source MN may initiate the source SN release procedure, in a case that the preset bit is empty, it means that the source MN does not need to initiate the source SN release procedure. Alternatively, in a case that the preset bit is not configured, it means that the source MN does not need to initiate the source SN release procedure, in a case that the preset bit is configured, it means that the source MN may initiate the source SN release procedure. Therefore, after receiving the information sent by the terminal device, the source MN may determine receipt of the indication information, when the value of the preset bit used for indication in the information is the preset value, or the information sent by the terminal includes the bit used for indication.

Optionally, the source MN determines the receipt of the indication information, when a value of a preset bit used for indication in information sent by another terminal is a preset value, or information sent by another terminal includes the bit used for indication information.

Optionally, the terminal device may also send 1-bit indication information.

In the present disclosure, the terminal device sends, to the source master node, the value of the preset bit or the preset bit for indicating the indication information. After receiving the information sent by the terminal device, the source master node can determine that the indication information has been received. In this way, with the trigger of the indication information, the source master node instructs the source secondary node to release resources of the terminal device at a correct time, thereby preventing the source secondary node from prematurely releasing the resources of the terminal device, and reducing the impact on the throughput of the terminal device.

Please refer to FIG. 10. FIG. 10 is a schematic flowchart of a method for controlling release of a source secondary node provided by an embodiment of the present disclosure. The method is executed by a target master node. As shown in FIG. 10, the method may include but is not limited to the following steps.

Step 1001: sending indication information to a source master node, where the indication information is used to instruct the source master node to initiate a source secondary node release procedure.

The source secondary node release procedure may include processes such as releasing a resource corresponding to the terminal device, and the present disclosure does not limit thereto.

Usually, in a case that the terminal device performs CPC while performing CHO, or configures a target SCG while performing CHO, when the source MN receives a handover request confirmation message from the target MN, the terminal device often has not accessed the target MN, and the source MN and the source SN still provide network services to the terminal device currently. In this case, the source MN sends an SN release request message to the source SN, and the source SN may immediately release the resources of the corresponding terminal device and may stop providing user data to the terminal device. As a result, only the source MN is providing network services to the terminal device, and thus the throughput of terminal is reduced.

In the present disclosure, in order to avoid the problem of the reduced throughput of the terminal device due to the incorrect timing of the source MN instructing the source SN to release resources, the target MN may send indication information to the source MN to indicate that the source MN can initiate the source secondary node release procedure, which ensures that the source SN can still provide communication services for the terminal device during the CHO handover procedure, thereby avoiding the impact on the throughput of the terminal device due to inappropriate release timing of the source SN.

In the present disclosure, the target master node may send indication information to the source master node to instruct the source master node to initiate the source secondary node release procedure. After that, the source master node may initiate the source secondary node release procedure. Thus, the indication information triggers the source master node to initiate the procedure of the source secondary node releasing resources of the terminal device at a correct time, thereby preventing the source secondary node from prematurely releasing resources of the terminal device and reducing the impact on the throughput of the terminal device.

Please refer to FIG. 11. FIG. 11 is a schematic flowchart of a method for controlling release of a source secondary node provided by an embodiment of the present disclosure. The method is executed by the target master node. As shown in FIG. 11, the method may include but is not limited to the following steps.

Step 1101: sending indication information to a source master node, in response to receiving a reconfiguration complete message, where the indication information is used to instruct the source master node to initiate a source secondary node release procedure.

The source secondary node release procedure may include processes such as releasing resources corresponding to the terminal device, which is not limited by the present disclosure.

Generally, in a case that the terminal device performs CPC while performing CHO, or configures a target SCG while performing CHO, the source MN can send a conditional handover configuration to the terminal device via a radio resource control (RRC) reconfiguration message, after receiving the handover request confirmation message from the target MN. After confirming receipt of the relevant configuration, the terminal device may send a radio resource control (RRC) reconfiguration complete message to the source MN, and then may start evaluating a condition for triggering the conditional reconfiguration. When the condition is met, the terminal device may also send an RRC reconfiguration complete message to the target MN, to indicate the completion of the corresponding RRC reconfiguration, thereby realizing connection with the target MN.

In the present disclosure, when the target MN receives the reconfiguration complete message, it indicates that the terminal device has completed the conditional handover, and may send indication information to the source MN to instruct the source MN to initiate the source SN release procedure, thereby preventing the source SN from prematurely releasing the resources of the terminal device, and reducing the impact on the throughput of the terminal device.

In the present disclosure, after receiving the reconfiguration complete message, the target master node may send indication information to the source master node, to instruct the source master node to initiate the source secondary node release procedure; and then the source master node may initiate the source secondary node release procedure. Thus, with the trigger of the indication information, the source master node instructs the source secondary node to release resources of the terminal device at the correct time, thereby preventing the source secondary node from prematurely releasing the resources of the terminal device, and reducing the impact on the throughput of the terminal device.

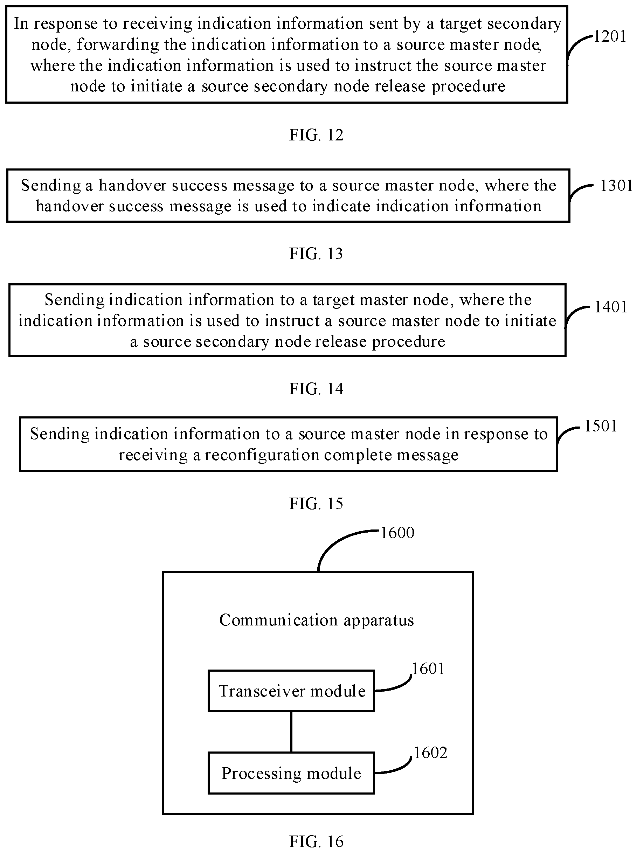

Please refer to FIG. 12. FIG. 12 is a schematic flowchart of a method for controlling release of a source secondary node provided by an embodiment of the present disclosure. The method is executed by a target master node. As shown in FIG. 12, the method may include but is not limited to the following steps.

Step 1201: in response to receiving indication information sent by a target secondary node, forwarding the indication information to a source master node, where the indication information is used to instruct the source master node to initiate a source secondary node release procedure.

The source secondary node release procedure may include processes such as releasing resources corresponding to the terminal device, and the present disclosure does not limit thereto.

In the present disclosure, in a case that the source MN triggers CPC and CHO simultaneously, or triggers configuring a target SCG and performing CHO simultaneously, the target MN may perform a CPC configuration when receiving the indication information sent by the source MN for indicating performing CHO and CPC simultaneously, the terminal device may perform a CPC process according to the CPC configuration. After the CPC is completed, the target SN may send indication information to the source MN to indicate that the source MN can initiate the source SN release procedure. However, when the target SN needs to communicate with the source MN, data needs to be forwarded by the target MN. Therefore, the target SN may send the indication information to the target MN, and the target MN forwards the indication information to the source MN to instruct the source MN to initiate the source SN release procedure. This can prevent the source SN from prematurely releasing resources of the terminal device and reduce the impact on the throughput of the terminal device.

In the present disclosure, the target master node may send indication information to the source master node to instruct the source master node to initiate the source secondary node release procedure, after receiving the indication information sent by the target secondary node, and then the source master node may initiate the source secondary node release procedure. Thus, the indication information triggers the source master node to initiate a procedure of the source secondary node releasing resources of the terminal device at the correct time, thereby preventing the source secondary node from prematurely releasing resources of the terminal device and reducing the impact on the throughput of the terminal device.

Please refer to FIG. 13. FIG. 13 is a schematic flowchart of a method for controlling release of a source secondary node provided by an embodiment of the present disclosure. The method is executed by the target master node. As shown in FIG. 13, the method may include but is not limited to the following steps.

Step 1301: sending a handover success message to a source master node, where the handover success message is used to indicate indication information.

The indication information is used to instruct the source master node to initiate a source secondary node release procedure, which is not limited in the present disclosure.

Generally, in a case that the source MN triggers CHO and performs CPC at the same time, or performs CHO and configures a target SCG at the same time, the terminal device can evaluate a candidate target cell corresponding to a candidate target node when performing CHO, for example, performing measurements, to determine whether the terminal device satisfies a condition for triggering a conditional reconfiguration of the candidate target cell corresponding to any candidate target node. In a case that a condition for triggering a conditional reconfiguration of a candidate target cell corresponding to a certain candidate target node is satisfied, the certain candidate target node may be determined as the target MN, and a cell corresponding to the certain candidate target node is the target cell. The terminal device may apply the configuration corresponding to the target cell, to initiate random access to the target cell, successfully access the target MN, and disconnect from the source MN. Afterwards, the target MN may send a handover success message to the source MN to inform the terminal device of that the target MN has successfully accessed the target MN. Transmission of a sequence number status will also be initiated between the target MN and the source MN to obtain a sequence number status associated with the terminal device, to ensure that the target MN can correctly receive the data forwarded by the source MN. Data forwarding may also be performed between the target MN and the source MN to obtain terminal device-related data cached by the source MN.

In the present disclosure, when the target MN sends a handover success message, it indicates that the terminal device has successfully connected with the target MN. When the source MN receives the handover success message sent by the target MN, the source MN may consider that the indication information has been received, and the source MN can initiate a release procedure of the source SN.

Alternatively, the target MN may use any bit in the handover success message to instruct the source MN to initiate the source SN release procedure. For example, the value of the bit may be set to "1" to instruct the source MN to initiate the source SN release procedure, and the value of the bit can be set to "0" to indicate that the source MN does not need to initiate the source SN release procedure. Therefore, the source MN may determine the receipt of the indication information, and may initiate the SN release procedure, when determining that a value of a preset bit in the received handover success message sent by the target MN is a preset value.

Optionally, when the target MN transmits the sequence number status, it indicates that the terminal device has successfully connected with the target MN, and the target MN may send indication information to the source MN to indicate that the source MN can initiate the source SN release procedure.

Alternatively, when receiving a sequence number status transmission message, the target MN may send indication information to the source MN.

Optionally, when the target MN forwards data, it indicates that the terminal device has successfully connected with the target MN, and the target MN can send indication information to the source MN, to instruct the source MN to initiate the source SN release procedure.

Optionally, the target MN may also send, to the source MN, separate indication information, specifically for instructing the source MN to initiate the source SN release procedure.

In the present disclosure, the target master node can send a successful handover message as the indication information to the source master node, and then the source master node can initiate the source secondary node release procedure upon receipt of the success message. Thus, the indication information triggers the source master node to initiate the procedure of the source secondary node releasing resources of the terminal device at a correct time, thereby preventing the source secondary node from prematurely releasing resources of the terminal device and reducing the impact on the throughput of the terminal device.

Please refer to FIG. 14. FIG. 14 is a schematic flowchart of a method for controlling release of a source secondary node provided by an embodiment of the present disclosure. The method is executed by a target secondary node. As shown in FIG. 14, the method may include but is not limited to the following steps.

Step 1401: sending indication information to a target master node, where the indication information is used to instruct a source master node to initiate a source secondary node release procedure.

The source secondary node release procedure may include processes such as releasing resources corresponding to the terminal device, and the present disclosure does not limit thereto.

In the present disclosure, in a case that the source MN triggers CHO and performs CPC simultaneously, or performs CHO and configures a target SCG simultaneously, the terminal device may perform a CPC configuration when receiving the indication information sent by the source MN for indicating performing CPC and CHO simultaneously, the terminal device may evaluate a candidate target cell corresponding to a candidate target node when performing a CPC process, for example, performing measurements, to determine whether the terminal device satisfies a condition for triggering a conditional reconfiguration of a candidate target cell corresponding to any candidate target node. In a case that a condition for triggering a conditional reconfiguration of a candidate target cell corresponding to a certain candidate target node is satisfied, the certain candidate target node may be determined as the target SN, and a cell corresponding to the certain candidate target node is the target cell. The terminal device may apply the configuration corresponding to the target cell, to initiate random access to the target cell, successfully access the target SN, and disconnect from the source SN. Afterwards, the target secondary node may send a handover success message to the target master node to inform the terminal device of that the target secondary node has been successfully accessed. Transmission of a sequence number status will also be initiated between the target SN and the target MN to obtain a sequence number status associated with the terminal device, to ensure that the target SN can correctly receive the data forwarded by the target MN. Data forwarding may also be performed between the target SN and the target MN to obtain terminal device-related data cached by the source SN.

However, when the target SN needs to communicate with the source MN, data needs to be forwarded by the target MN. Therefore, after determining that a connection has been established between the target SN and the terminal device, the target SN may send indication information to the target MN, and then the target MN forwards the indication information to the source MN, to instruct the source MN to initiate the source SN release procedure, which can prevent the source SN from prematurely releasing resources of the terminal device and can reduce the impact on the throughput of the terminal device.

Optionally, when the target secondary node sends a message indicating that the SN access is successful, it indicates that the terminal device has successfully connected to the target secondary node. The target master node receives a message from the target secondary node indicating that the SN access is successful, it is deemed that the indication information has been received.

Alternatively, the target secondary node may use any bit in the SN access success message to instruct the source master node to initiate the source secondary node release procedure. For example, the value of this bit may be set to "1" to indicate that the source master node initiates the source secondary node release procedure, and the value of this bit may be set to "0" to indicate that the source master node does not need to initiate the source secondary node release procedure. Therefore, the target master node can determine the receipt of the indication information, and can initiate the source secondary node release procedure, in a case that a value of a preset bit in the received handover success message sent by the target secondary node is a preset value.

Optionally, when the target SN transmits a sequence number status, it indicates that the terminal device has successfully connected with the target SN. In this time, the target SN may send indication information to the target MN, and the target MN may forward the indication information to the source MN, to instruct the source MN to initiate a source SN release procedure.

Alternatively, in response to receiving a sequence number status transmission message, the target SN may send indication information to the target MN.

Optionally, when the target SN forwards data, it indicates that the terminal device has successfully connected with the target SN, the target SN may send indication information to the target MN, and the target MN may forward the indication information to the source MN, to indicate that the source MN can initiates the source SN release procedure.

Optionally, the target SN may also send a separate instruction message to the target MN, specifically for instructing the source MN to initiate the source SN release procedure.

In the present disclosure, the target secondary node can send indication information to the target master node for instructing the source master node to initiate the source secondary node release procedure, and then the target master node can forward the indication information to the source master node. The source master node can initiate the source secondary node release procedure when receiving the indication information. Thus, the indication information triggers the source master node to initiate the procedure that the source secondary node releases a resource of the terminal device at a correct time, thereby preventing the source secondary node from prematurely releasing the resource of the terminal device and reducing the impact on the throughput of the terminal device.

Please refer to FIG. 15. FIG. 15 is a schematic flowchart of a method for controlling release of a source secondary node provided by an embodiment of the present disclosure. The method is executed by a target secondary node. As shown in FIG. 15, the method may include but not limited to the following steps.

Step 1501: sending indication information to a target master node, in response to receiving a reconfiguration complete message.

The indication information is used to instruct the source master node to initiate the source secondary node release procedure. The present disclosure does not limit this.

In the present disclosure, in a case that the source MN triggers CPC while performing CHO, or configures a target SCG while performing CHO, the target MN may perform CPC configuration, when receiving the indication information sent by the source MN for indicating perform CPC and CHO simultaneously, the terminal device may perform a CPC process according to the CPC configuration. After completing the CPC, the terminal device can also directly or indirectly send an SN reconfiguration complete message to the target master node. The target master node can forward the SN reconfiguration complete message to the target SN, to indicate completion of a connection to the target secondary node.

In the present disclosure, when the target secondary node receives the reconfiguration complete message, it indicates that the terminal device has completed the connection with the target secondary node, so the indication information can be sent to the target master node. Afterwards, the target master node can forward the indication information to the source master node to instruct the source master node to initiate the source secondary node release procedure, thereby preventing the source SN from releasing resources of the terminal device prematurely and reducing the impact on the throughput of the terminal device.

In the present disclosure, after receiving the reconfiguration complete message, the target secondary node can send indication information to the target master node to instruct the source master node to initiate the source secondary node release procedure, the target master node can forward the indication information to the source master node, and then, the source master node can initiate the source secondary node release procedure. Thus, the indication information triggers the source master node to initiate the procedure that the source secondary node releases resources of the terminal device at a correct time, thereby preventing the source secondary node from prematurely releasing the resources of the terminal device and reducing the impact on the throughput of the terminal device.

Reference is made to FIG. 16. FIG. 16 is a schematic structural diagram of a communication apparatus 1600 provided by an embodiment of the present disclosure. The communication apparatus 1600 shown in FIG. 16 may include a processing module 1601 and a transceiver module 1602. The transceiver module 1602 may include a sending module and/or a receiving module. The sending module is configured to implement a sending function, and the receiving module is configured to implement a receiving function. The transceiver module 1602 may implement the sending function and/or the receiving function.

It will be understood that the communication apparatus 1600 may be a source master node, a device in the source master node, or a device that can be used in conjunction with the source master node.

The communication apparatus 1600 is on the side of the source master node.

The processing module 1601 is configured to initiate a source secondary node release procedure based on indication information, where the indication information is used to instruct the source master node to initiate the source secondary node release procedure.

Optionally, a transceiver module 1602 is configured to:
receive the indication information sent by a terminal device; or,
receive the indication information sent by a target master node; or,
receive the indication information sent by a target secondary node and forwarded by a target master node.

Optionally, the indication information is implicit indication information, or the indication information is explicit indication information.

Optionally, the transceiver module 1602 is configured to:
determine receipt of the indication information, in response to receiving terminal device assistance information sent by the terminal device.

Optionally, the transceiver module 1602 is configured to:
determine receipt of the indication information, in response to a value of a preset bit used for indication in the information sent by the terminal device being a preset value, or the information sent by the terminal device including a bit used for indication.

Optionally, the transceiver module 1602 is configured to:
determine receipt of the indication information, in response to receiving a handover success message sent by the target master node.

Optionally, the processing module 1601 is configured to:
send a release request message to the source secondary node.

Optionally, the processing module 1601 is also configured to:
send a release request message to the source secondary node, in response to receiving a handover success message sent by the target master node.

In the present disclosure, the source master node may initiate a source secondary node release procedure based on indication information used to instruct the source master node to initiate the source secondary node release procedure. Thus, the indication information triggers the source master node to initiate the procedure of the source secondary node releases resources of the terminal device at a correct time, thereby preventing the source secondary node from prematurely releasing the resources of the terminal device and reducing the impact on the throughput of the terminal device.

It can be understood that the communication apparatus 1600 may be a terminal device, a device in the terminal device, or a device that can be used in conjunction with the terminal device.

The communication apparatus 1600 is on the side of the terminal device.

The transceiver module 1602 is configured to send indication information to the source master node, where the indication information is used to instruct the source master node to initiate a source secondary node release procedure.

Optionally, the processing module 1601 is configured to:
send indication information to the source master node, in response to the terminal device triggering a conditional reconfiguration.

Optionally, the above terminal device triggering the conditional reconfiguration includes:
the terminal device meets a condition for triggering the conditional reconfiguration of one or more candidate cells; or,
the terminal device starts an execution process of the conditional reconfiguration.

Optionally, the transceiver module 1602 is configured to:
send the indication information to the source master node before the terminal device and the source master node are disconnected; and/or,
send the indication information to the source master node before a configuration of a selected candidate cell is applied.

Optionally, the indication information is implicit indication information, or the indication information is explicit indication information.

Optionally, the transceiver module 1602 is configured to:
send terminal device assistance information to the source master node, where the terminal device assistance information is used to indicate the indication information;

Optionally, the transceiver module 1602 is configured to:
send information to the source master node, where a value of a preset bit in the information or a preset bit in the information sent by the terminal device is used to indicate the indication information.

In the present disclosure, the terminal device can send indication information to the source master node for instructing the source master node to initiate the source secondary node release procedure, and then, the source master node can initiate the source secondary node release procedure. Thus, the indication information triggers the source master node to initiate the procedure of the source secondary node releasing resources of the terminal device at a correct time, thereby preventing the source secondary node from prematurely releasing the resources of the terminal device and reducing the impact on the throughput of the terminal device.

It can be understood that the communication apparatus 1600 may be a target master node, a device in the target master node, or a device that can be used in conjunction with the target master node.

The communication apparatus 1600 is on the side of the target master node.

The transceiver module 1602 is configured to send indication information to the source master node, where the indication information is used to instruct the source master node to initiate a source secondary node release procedure.

Optionally, the processing module 1601 is configured to:
send the indication information to the source master node, in response to receiving a reconfiguration complete message; or,
forward the indication information to the source master node, in response to receiving the indication information sent by a target secondary node.

Optionally, the transceiver module 1602 is configured to:
send a handover success message to the source master node, where the handover success message is used to indicate the indication information.

In the present disclosure, the target master node may send indication information to the source master node to instruct the source master node to initiate the source secondary node release procedure, and then, the source master node may initiate the source secondary node release procedure. Thus, the indication information triggers the source master node to initiate the procedure of the source secondary node releasing resources of the terminal device at a correct time, thereby preventing the source secondary node from prematurely releasing the resources of the terminal device and reducing the impact on the throughput of the terminal device.

It can be understood that the communication apparatus 1600 may be a target secondary node, a device in the target secondary node, or a device that can be used in conjunction with the target secondary node.

The communication apparatus 1600 is on the side of the target secondary node.

The transceiver module 1602 is configured to send indication information to the target master node, where the indication information is used to instruct the source master node to initiate a source secondary node release procedure.

Optionally, the processing module 1601 is configured to:
send the indication information to the target master node, in response to receiving a reconfiguration complete message.

In the present disclosure, the target secondary node can send indication information to the target master node for instructing the source master node to initiate the source secondary node release procedure, the target master node can forward the indication information to the source master node, and the source master node can initiate the source secondary node release procedure when receiving the indication information. Thus, the indication information triggers the source master node to initiate the procedure of the source secondary node releasing a resource of the terminal device at a correct time, thereby preventing the source secondary node from prematurely releasing the resource of the terminal device and reducing the impact on the throughput of the terminal device.

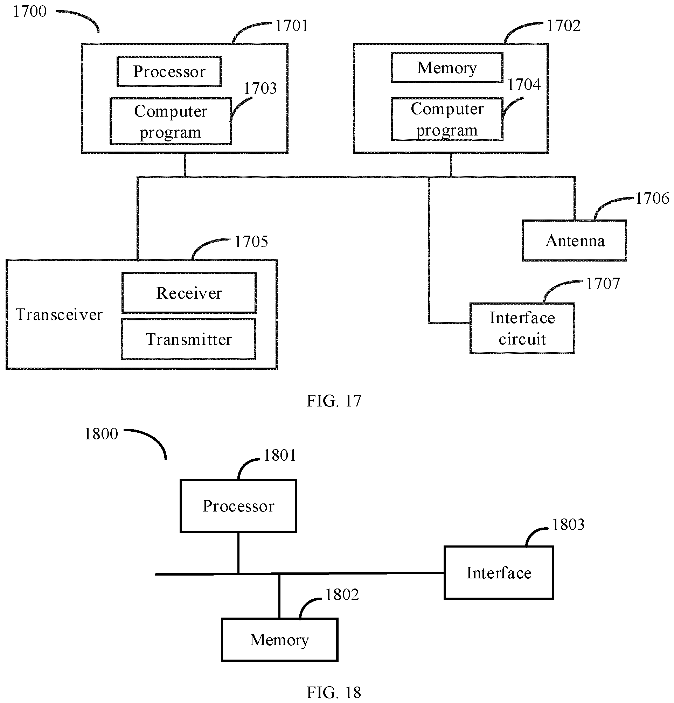

Referring to FIG. 17, FIG. 17 is a schematic structural diagram of another communication apparatus 1700 provided by an embodiment of the present disclosure. The communication apparatus 1700 may be a network device, or a terminal device, or may be a chip, a chip system, or a processor that supports the network device to implement the above method, or a chip, a chip system, or a processor that supports the terminal device to implement the above method. The device can be used to implement the method described in the above method embodiments. For details, reference can be made to the description in the above method embodiments.

The communication apparatus 1700 may include one or more processors 1701. The processor 1701 may be a general-purpose processor or a special-purpose processor, or the like. For example, the processor may be a baseband processor or a central processing unit. The baseband processor may be used to process communication protocols and communication data. The central processor may be configured to control communication apparatuses (such as base station, baseband chip, terminal, terminal chip, DU or CU, etc.), to execute computer programs, and to process data for the computer programs.

Optionally, the communication apparatus 1700 may also include one or more memories 1702, on which a computer program 1704 may be stored. The processor 1701 executes the computer program 1704, to enable the communication apparatus 1700 to perform steps described in the above method embodiments. Optionally, the memory 1702 may also store data. The communication apparatus 1700 and the memory 1702 may be arranged separately or integrated together.

Optionally, the communication apparatus 1700 may also include a transceiver 1705 and an antenna 1706. The transceiver 1705 may be referred to as a transceiver unit, a transceiver, a transceiver circuit, etc., and is used to implement transceiver functions. The transceiver 1705 may include a receiver and a transmitter. The receiver may be called a receiver or a receiving circuit, etc., used to implement the receiving function; the transmitter may be referred to as a transmitter, a transmitting circuit, etc., used to implement the transmitting function.

Optionally, the communication apparatus 1700 may also include one or more interface circuits 1707. The interface circuit 1707 is configured to receive code instructions and transmit them to the processor 1701. The processor 1701 executes the code instructions to cause the communication apparatus 1700 to perform the method described in the above method embodiment.

The communication apparatus 1700 is the source master node. The processor 1701 is configured to execute step 201 in FIG. 2; step 302 in FIG. 3; step 402 in FIG. 4; step 502 in FIG. 5, etc.

The communication apparatus 1700 is a terminal device. The transceiver 1705 is configured to execute step 601 in FIG. 6; step 701 in FIG. 7; step 801 in FIG. 8; step 901 in FIG. 9, etc.

The communication apparatus 1700 is the target master node. The transceiver 1705 is configured to execute step 1001 in FIG. 10, etc.

The communication apparatus 1700 is the target secondary node. The transceiver 1705 is configured to execute step 1401 in FIG. 14, etc.

In an implementation, the processor 1701 may include a transceiver for implementing receiving and transmitting functions. For example, the transceiver may be a transceiver circuit, an interface, or an interface circuit. The transceiver circuit, the interface or the interface circuit used to implement the receiving and transmitting functions can be separated or integrated together. The above transceiver circuit, interface or interface circuit may be used for reading and writing codes/data, or the above transceiver circuit, interface or interface circuit may be used for signal transmission or transfer.

In an implementation, the processor 1701 may store a computer program 1703, and the computer program 1703 runs on the processor 1701, to cause the communication apparatus 1700 to perform the method described in the above method embodiments. The computer program 1703 may be stored in the processor 1701, and in this case, the processor 1701 may be implemented by hardware.

In an implementation, the communication apparatus 1700 may include a circuit, which may implement functions of sending or receiving or communicating in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), electronic equipment, etc. The processor and the transceiver may also be manufactured using various IC process technologies, such as complementary metal oxide semiconductor (CMOS), N-type Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a network device or a terminal device, but the scope of the communication apparatus described in the present disclosure is not limited thereto, and the structure of the communication apparatus may not be limited by FIG. 17. The communication apparatus may be a stand-alone device or may be a part of a larger device. For example, the communication apparatus may be:
(1) an independent integrated circuit (IC), or chip, or chip system or subsystem;
(2) a collection of one or more ICs, where, optionally, the IC collection may also include a storage component for storing data and computer programs;
(3)ASIC, such as Modem;
(4) a module that can be embedded into other devices;
(5) a receiver, a terminal, an intelligent terminal, a cellular phone, a wireless equipment, a handheld device, a mobile unit, a vehicle-mounted equipment, a network device, a cloud equipment, an artificial intelligence equipment, etc.;
(6) other component, etc.

For the case where the communication apparatus may be a chip or a chip system, reference may be made to the schematic structural diagram of the chip shown in FIG. 18. The chip shown in FIG. 18 includes a processor 1801 and an interface 1803. The number of processors 1801 may be one or more, and the number of interfaces 1803 may be multiple.

For the case where the chip is configured to implement the functions of the source master node in the embodiments of the present disclosure,
the interface 1803 is configured to execute step 301 in FIG. 3; step 401 in FIG. 4; step 501 in FIG. 5, etc.

For the case where the chip is configured to implement the functions of the terminal device in the embodiments of the present disclosure,
the interface 1803 is configured to execute the transceiver 1705 for executing step 601 in FIG. 6; step 701 in FIG. 7; step 801 in FIG. 8; step 901 in FIG. 9, etc.

For the case where the chip is used to implement the functions of the target master node in the embodiments of the present disclosure,
the interface 1803 is configured to cause the transceiver 1705 to execute step 1001 in FIG. 10, etc.

For the case where the chip is used to implement the functions of the target secondary node in the embodiments of the present disclosure,
the interface 1803 is configured to cause the transceiver 1705 to execute step 1401 in FIG. 14, etc.

Optionally, the chip also includes a memory 1803, which is configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in or transferred from one computer-readable storage medium to another computer-readable storage medium. For example, the computer program may be transferred from a website, a computer, a server, or a data center to another website, computer, server or data center to another website, a computer, a server, or a data center to another website, computer, server or data center via wired means (such as coaxial cable, optical fiber, digital subscriber line (DSL)) or wireless means (such as infrared, wireless, microwave, etc.). The computer-readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may understand that the first, second, and other numerical numbers involved in the present disclosure are only for convenience of description and are not used to limit the scope of the embodiments of the present disclosure, or to indicate the order.

At least one in the present disclosure may also be described as one or more, and the plurality may be two, three, four or more, which are not limited by the present disclosure. In the embodiments of the present disclosure, technical features are distinguished by terms "first", "second", "third", "A", "B", "C" and "D" etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, storage, pre-storage, pre-negotiation, pre-configuration, solidification, or pre-burning.

Those of ordinary skill in the art will understand that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Those of ordinary skill in the art may implement the described functionality using different methods for each specific application, but such implementations should not be considered as exceeding the scope of the present disclosure.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific embodiments of the present disclosure, but the protection scope of the present disclosure is not limited thereto. Any person familiar with the technical field can easily think of changes or substitutions within the technical scope disclosed in the present disclosure, all of which shall fall within the protection scope of the present disclosure. Therefore, the protection scope of the present disclosure should be subject to the protection scope of the claims.

## Claims

1. A method for controlling release of a source secondary node, executed by a source master node, comprising:
initiating a source secondary node release procedure based on indication information, wherein the indication information is used to instruct the source master node to initiate the source secondary node release procedure.

2. The method according to claim 1, further comprising:
receiving the indication information sent by a terminal device; or,
receiving the indication information sent by a target master node; or,
receiving the indication information sent by a target secondary node and forwarded by a target master node.

3. The method according to claim 2, wherein the indication information is implicit indication information, or the indication information is explicit indication information.

4. The method according to claim 2, wherein the receiving the indication information sent by the terminal device comprises:
determining receipt of the indication information, in response to receiving terminal device assistance information sent by the terminal device.

5. The method according to claim 2, wherein the receiving the indication information sent by the terminal device comprises:
determining receipt of the indication information, in response to a value of a preset bit used for indication in information sent by the terminal device being a preset value, or information sent by the terminal device comprising a bit used for indication.

6. The method according to claim 2, wherein the receiving the indication information sent by the target master node comprises:
determining receipt of the indication information, in response to receiving a handover success message sent by the target master node.

7. The method according to any one of claims 1 to 6, wherein the initiating the source secondary node release procedure comprises:
sending a release request message to the source secondary node.

8. The method according to any one of claims 1 to 7, further comprising:
sending a release request message to the source secondary node, in response to receiving a handover success message sent by a target master node.

9. A method for controlling release of a source secondary node, executed by a terminal device, comprising:
sending indication information to a source master node, wherein the indication information is used to instruct the source master node to initiate a source secondary node release procedure.

10. The method according to claim 9, further comprising:
sending the indication information to the source master node, in response to the terminal device triggering a conditional reconfiguration.

11. The method according to claim 10, wherein the terminal device triggering the conditional reconfiguration comprises:
the terminal device meeting a condition for triggering the conditional reconfiguration of one or more candidate cells; or,
the terminal device starting an execution process of the conditional reconfiguration.

12. The method according to any one of claims 9 to 11, wherein the sending the indication information to the source master node comprises:
sending the indication information to the source master node before the terminal device and the source master node are disconnected; and/or,
sending the indication information to the source master node before a configuration of a selected candidate cell is applied.

13. The method according to any one of claims 9 to 11, wherein the indication information is implicit indication information, or the indication information is explicit indication information.

14. The method according to any one of claims 9 to 11, wherein the sending the indication information to the source master node comprises:
sending terminal device assistance information to the source master node, wherein the terminal device assistance information is used to indicate the indication information.

15. The method according to any one of claims 9 to 11, wherein the receiving the indication information sent by the terminal device comprises:
sending information to the source master node, wherein a value of a preset bit in the information or a preset bit in the information sent by the terminal device is used to indicate the indication information.

16. A method for controlling release of a source secondary node, executed by a target master node, comprising:
sending indication information to a source master node, wherein the indication information is used to instruct the source master node to initiate a source secondary node release procedure.

17. The method according to claim 16, wherein the sending the indication information to the source master node comprises:
sending the indication information to the source master node, in response to receiving a reconfiguration complete message; or,
forwarding the indication information to the source master node, in response to receiving the indication information sent by a target secondary node.

18. The method according to claim 16, wherein the sending the indication information to the source master node comprises:
sending a handover success message to the source master node, wherein the handover success message is used to indicate the indication information.

19. A method for controlling release of a source secondary node, executed by a target secondary node, comprising:
sending indication information to a target master node, wherein the indication information is used to instruct a source master node to initiate a source secondary node release procedure.

20. The method according to claim 19, wherein the sending the indication information to the target master node comprises:
sending the indication information to the target master node, in response to receiving a reconfiguration complete message.

21. A communication apparatus, comprising:
a processing module, configured to initiate a source secondary node release procedure based on indication information, wherein the indication information is used to instruct a source master node to initiate the source secondary node release procedure.

22. A communication apparatus, comprising:
a transceiver module, configured to send indication information to a source master node, wherein the indication information is used to instruct the source master node to initiate a source secondary node release procedure.

23. A communication apparatus, comprising:
a transceiver module, configured to send indication information to a source master node, wherein the indication information is used to instruct the source master node to initiate a source secondary node release procedure.

24. A communication apparatus, comprising:
a transceiver module, configured to send indication information to a target master node, wherein the indication information is used to instruct a source master node to initiate a source secondary node release procedure.

25. A communication apparatus, comprising a processor and a memory, wherein the memory stores a computer program, and the processor is configured to execute the computer program stored in the memory to enable the apparatus to perform the method according to any one of claims 1 to 8, or perform the method according to any one of claims 9 to 15, or perform the method according to any one of claims 16 to 18, or perform the method according to any one of claims 19 to 20.

26. A computer-readable storage medium, configured to store instructions, wherein the instructions are executed to implement the method according to any one of claims 1 to 8, or implement the method according to any one of claims 9 to 15, or implement the method according to any one of claims 16 to 18, or implement the method according to any one of claims 19 to 20.
